# EUROPÄISCHE PATENTSCHRIFT

(11) **EP 0 634 307 B1**
(45) Veröffentlichungstag und Bekanntmachung des Hinweises auf die Patenterteilung: **22.01.1997**
(21) Anmeldenummer: 94109535.8
(22) Anmeldetag: 21.06.1994
(51) Int. Cl.: B60R 9/045

(54) **Dachlastenträger für Fahrzeuge**
Roof carrier for vehicles
Porte-bagages de toit pour véhicules

(30) Priorität: 29.06.1993 DE 4321535
(43) Veröffentlichungstag der Anmeldung: 18.01.1995
(73) Patentinhaber: Happich Fahrzeug-Dachsysteme GmbH, D-42285 Wuppertal (DE)
(72) Erfinder: Fisch, Fritz, D-42111 Wuppertal (DE); Rehm, Ulrich, D-58089 Hagen (DE)

(56) Entgegenhaltungen:
- EP-A- 0 211 297
- WO-A-91/08929
- DE-U- 8 809 404
- FR-A- 2 661 378

## Beschreibung

Die Erfindung bezieht sich auf einen Dachlastenträger für Fahrzeuge mit zwei auf dem Fahrzeugdach befestigten Trägerleisten, die jeweils aus einer ersten Position, in der sie zumindest annähernd parallel zueinander entlang der Seitenränder der Dachfläche verlaufen, in eine zweite Position, in der sie sich quer über das Fahrzeugdach erstrecken, um eine vertikale Achse schwenkbar und in jeder dieser Positionen arretierbar sind.

In der DE- 36 41 745 C2 ist ein Dachlastenträger in Form von auf dem Dach eines PKW's in Fahrzeug-Längsrichtung parallel zueinander angeordneten Relings, die aus je mindestens einem Längsholm bestehen, die mit wenigstens zwei Fußpunkten mit dem Dach fest verbunden sind, beschrieben. Bei diesem bekannten Dachlastträger ist vorgesehen, daß die Längsholme jeweils eines Relings mit den Fußpunkten in Lagern um eine vertikale Achse schwenkbar angeordnet sind und in den Fußpunkten zugeordneten Rastpunkten des gegenüberliegenden Relings einrastbar und verriegelbar sind.

Eine ähnliche Anordnung mit einer ein Dach aufweisenden Fahrzeugkarosserie und einer auf dem Dach befestigten, aus zwei sich im wesentlichen in Fahrtrichtung erstreckenden, zumindest annähernd parallel verlaufenden Holmen bestehenden Reling für einen Dachgepäckträger, der von den Holmen und von einzelnen zwischen den Holmen angeordneten Tragstäben gebildet ist, die bei Nichtgebrauch des Dachgepäckträgers aus ihrer Gebrauchslage entfernbar sind, ist in der DE- 38 14 799 C2 gezeigt. Dabei ist vorgesehen, daß die Holme Kammern zur Aufnahme der nicht benötigten Tragstäbe aufweisen.

In beiden Fällen wurde erreicht, daß die aus ihrer bestimmungsgemäßen Betriebsstellung, in der sie sich quer über das Fahrzeugdach erstrecken, entfernten Tragstäbe stets mitgeführt werden können, ohne das sie Platz im Fahrzeuginnenraum beanspruchen.

Der vorliegenden Erfindung liegt nun ausgehend von einem Dachlastenträger der eingangs angegebenen Art die Aufgabe zugrunde, eine Verbesserung dahingehend zu erzielen, daß der Dachlastenträger in seiner Ausgangslage dem Fahrzeugdach unmittelbar benachbart angeordnet werden kann und Vorsorge dafür zu treffen, daß die Trägerleisten dennoch, insbesondere auch bei einer nach oben gewölbten Dachausbildung, problemlos in ihre bestimmungsgemäße Betriebsstellung geschwenkt werden können.

Zur Lösung dieser Aufgabe ist erfindungsgemäß vorgesehen, daß die Trägerleisten zusätzlich längs der vertikalen Achsen verschiebbar und in einer unteren sowie in einer oberen Höhenlage arretierbar sind.

Die erfindungsgemäßen Maßnahmen ermöglichen es, die Trägerleisten bei Nichtgebrauch der Dachhaut unmittelbar, zumindest aber nahe benachbart zuzuordnen, was der Aerodynamik zugute kommt, dem angenehmen Erscheinungsbild förderlich ist und Windgeräusche zu vermeiden hilft. Andererseits kann durch die Verschiebbarkeit der Trägerleisten längs der vertikalen Achsen ein genügend großer Abstand zwischen diesen und dem jeweiligen Fahrzeugdach hergestellt werden, um eine Beschickung mit Tragelementen oder sonstiger Zubehörteile und ein Verschwenken der Trägerleisten in die Gebrauchsstellung auch bei stark gewölbten Fahrzeugdächern zu gewährleisten.

Vorteilhafte Ausgestaltungen und zweckmäßige Weiterbildungen der Erfindung sind in den Unteransprüchen angegeben.

Ausführungsbeispiele der Erfindung werden im folgenden anhand der Zeichnung näher erläutert. Es zeigen:
- Fig. 1: eine Dachleistenanordnung auf einem Fahrzeugdach mit sich in der Nichtgebrauchslage befindlichen Trägerleisten,
- Fig. 2: eine Dachleistenanordnung, ähnlich der nach Fig. 1 mit sich in Gebrauchsstellung befindlichen Trägerleisten,
- Fig. 3: einen Schnitt etwa folgend der Linie III-III in Fig. 1,
- Fig. 4: einen Stützfuß für eine Trägerleiste und
- Fig. 5: eine Einzelheit der Erfindung in schaubildlicher Ansicht.

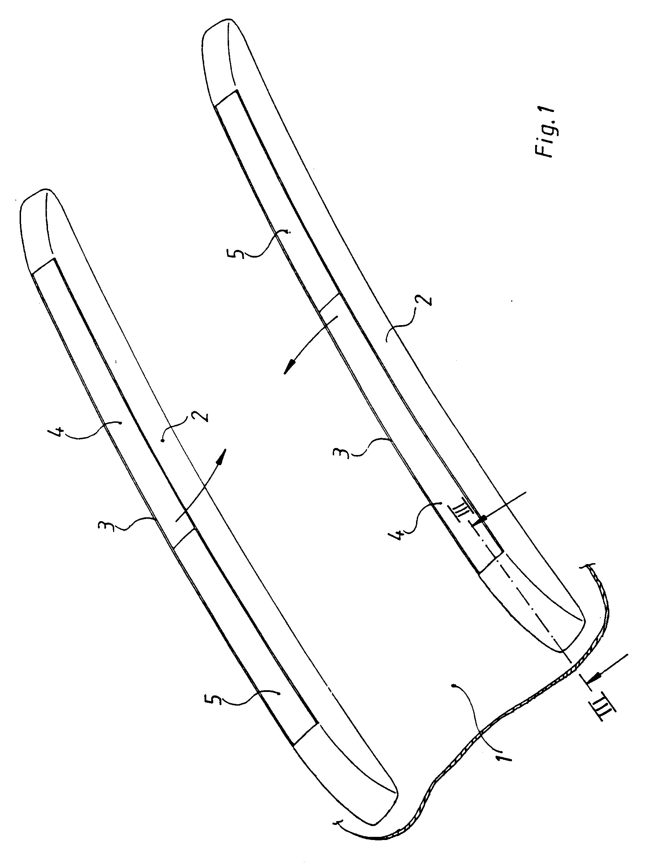

In Fig. 1 ist ein Fahrzeugdach 1 angedeutet, auf dem zwei Dachleisten 2 annähernd parallel zueinander entlang der Seitenränder der Dachfläche verlaufend befestigt sind. Die Dachleisten 2 besitzen jeweils eine nach oben offene Aussparung 3, die sich nahezu über die gesamte Dachleistenlänge erstreckt. Die Aussparungen 3 nehmen jeweils eine Trägerleiste 4 auf, deren Länge kürzer als die Länge der Aussparungen 3 bemessen ist. Die übrigen Aussparungsbereiche sind jeweils durch eine Abdeckung 5 abgedeckt.

Die im Ausführungsbeispiel nach Fig. 1 versetzt zueinander in den zugehörigen Dachleisten 2 angeordneten Trägerleisten 4 sind jeweils einendig auf einer vertikalen Achse 6 höhenverstellbar und jeweils in Pfeilrichtung verschwenkbar angeordnet. Im Bedarfsfall können somit die Trägerleisten 4 aus den Aussparungen 3 der Dachleisten 2 nach oben hin hinaufbewegt und mit ihren freien Enden jeweils zur anderen Dachleiste 2 hin verschwenkt und daran jeweils festgelegt werden.

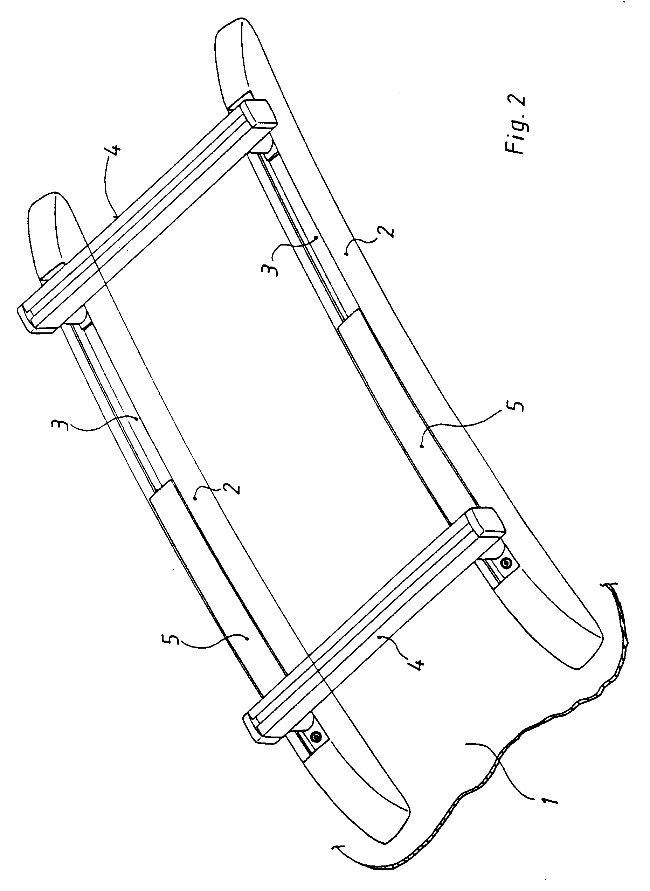

Fig. 2 zeigt im wesentlichen die Anordnung nach Fig. 1, wobei sich die Trägerleisten 4 in ihrer Gebrauchsstellung befinden und mit ihren Endbereichen an den beiden Dachleisten 2 festgelegt sind. Aus Fig. 2 ist erkennbar, daß zwischen dem Fahrzeugdach 1 und den Trägerleisten 4 eine relativ große Dachfreiheit besteht.

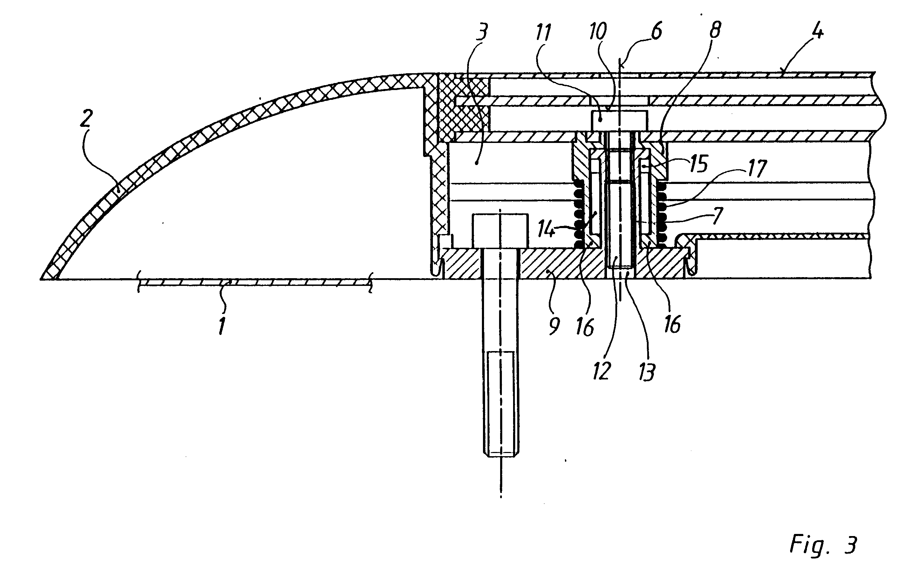

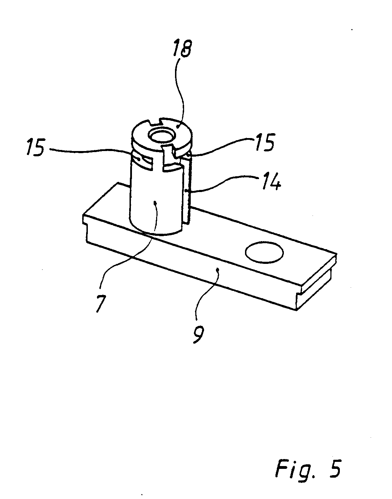

Fig. 3 zeigt eine Höhenverstell- und Schwenklagereinrichtung für eine Trägerleiste 4. Dabei ist ersichtlich, daß die vertikale Achse 6 aus einem Zapfen 7 und einer axial und radial geführten Hülse 8 gebildet ist. Der Zapfen 7, der unmittelbar am Dach, ggf. auch in einer Dachmulde befestigt sein kann, sitzt hier an einem Kulissenstein 9, der seinerseits in nicht näher dargestellter Weise am Fahrzeugdach 1 bzw. einer darunter befindlichen Dachträgerkonstruktion befestigbar ist. Während der Zapfen 7 verdrehfest am Fahrzeugdach 1 bzw. Kulissenstein 9 angeordnet ist, sitzt die Hülse 8 verdrehfest an der Trägerleiste 4 und wird gehalten von einer Stellschraube 10, deren Schraubenkopf 11 sich an der Trägerleiste 4 abstützt und deren Gewindeschaft 12 in eine mit Innengewinde versehene Bohrung 13 des Zapfens 7 eingreift. Der Zapfen 7 weist, vergleiche auch Fig. 5, sich axial erstreckende Kulissennuten 14 und kurz vor seinem freien Ende sich radial erstreckende Kulissennuten 15 auf. In diesen Kulissennuten 14, 15 sind nach innen gerichtete Führungsnocken 16 der Hülse 8 geführt aufgenommen. Die Hülse 8 weist einen durch eine kopfseitige Verdickung gebildeten Ringflansch zur Abstützung einer Schraubendruckfeder 17 auf, die sich anderendig auf dem Kulissenstein 9 abstützt.

Um eine Trägerleiste 4 aus ihrer Nichtgebrauchslage nach Fig. 1 in eine Gebrauchslage nach Fig. 2 zu überführen, wird zunächst die Stellschraube 10 gelöst und die Trägerleiste 4 zufolge der Kraft der Feder 17 nach oben gedrückt. Dabei gleiten die Führungsnocken 16 in den axialen Kulissennuten 14 bis zum Erreichen des Flanschanschlags 18 entlang. In dieser Endstellung befinden sich die Führungsnocken 16 in Höhe der radialen Kulissennuten 15, so daß es möglich ist, die Trägerleisten 4 um 90 Winkelgrade zu schwenken, damit ihr freier Endbereich an der gegenüberliegenden Dachleiste 2 zur Anlage gelangt. Hier befindet sich eine Fig. 3 ähnliche Anordnung von Zapfen 7 und Hülse 8, wobei jedoch auf eine Feder 17 verzichtet werden kann. Durch Anziehen der auf beiden Seiten befindlichen Stellschrauben 10 wird eine stabile Festlegung der Trägerleisten 4 erzielt, wobei die Zapfen 7 auf dem Dach, die Hülsen 8 an den Zapfen 7 und die Trägerleiste 4 auf der Hülse 8 abgestützt sind. Ein Überführen der Trägerleisten 4 in die Nichtgebrauchslage erfolgt in umgekehrter Reihenfolge der aufgezeigten Schritte.

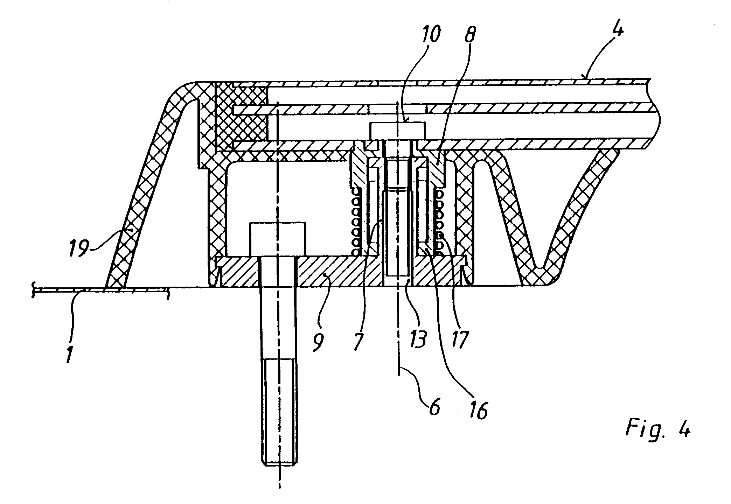

Das Ausführungsbeispiel nach Fig. 4 unterscheidet sich von den vorbeschriebenen im wesentlichen nur dadurch, daß die Trägerleiste 4 hier ähnlich einer Dachreling an Stützfüßen 18, von denen nur einer dargestellt ist, angeordnet ist. Im übrigen ist beim Ausführungsbeispiel nach Fig. 4 der gleiche Höhenverstell- und Schwenkmechanismus wie vorbeschrieben vorgesehen.

Zu erwähnen ist noch, daß sowohl die Dachleisten 2 als auch die Stützfüße 19 durch eine Klipsmontage an den Kulissensteinen 9 festlegbar sind.

## Patentansprüche

1. Dachlastenträger für Fahrzeuge mit zwei auf dem Fahrzeugdach (1) befestigten Trägerleisten (4), die jeweils aus einer ersten Position, in der sie zumindest annähernd parallel zueinander entlang der Seitenränder der Dachfläche verlaufend, in eine zweite Position, in der sie sich quer über das Fahrzeugdach (1) erstrecken, um eine vertikale Achse (6) schwenkbar und in jeder dieser Positionen arretierbar sind, dadurch gekennzeichnet, daß die Trägerleisten (4) zusätzlich längs der vertikalen Achsen (6) verschiebbar und in einer unteren sowie in einer oberen Höhenlage arretierbar sind.

2. Dachlastenträger nach Anspruch 1, dadurch gekennzeichnet, daß die Trägerleisten (4) jeweils nach dem Lösen einer Halterung (Stellschraube 10) aus einer der Dachfläche benachbarten unteren Position in eine der Dachfläche beabstandeten oberen Position verschiebbar und in dieser oberen Position verschwenkbar sind.

3. Dachlastenträger nach Anspruch 1 oder 2, dadurch gekennzeichnet, daß zum Unterstützen der Schiebebewegung Federmittel (Schraubendruckfeder 17) vorgesehen sind.

4. Dachlastenträger nach wenigstens einem der Ansprüche 1 bis 3, dadurch gekennzeichnet, daß die Federmittel (17) so angeordnet sind, daß sie die Trägerleisten (4) jeweils in Richtung zur oberen Position belasten.

5. Dachlastenträger nach wenigstens einem der Ansprüche 1 bis 4, dadurch gekennzeichnet, daß die vertikalen Achsen (6) jeweils aus einem Zapfen (7) und einer daran axial und radial geführten Hülse (8) gebildet sind, wobei die Zapfen (7) einendig am Fahrzeugdach (1) und die Hülsen (8) einendig an den Trägerleisten (4) befestigt sind, und wobei die Zapfen (7) jeweils eine Bohrung (13) mit Innengewinde aufweisen, in der der Gewindeschaft (12) einer sich mit ihrem Kopf (11) auf der zugehörigen Trägerleiste (4) abstützenden Stellschraube (10) axial verschiebbar geführt ist.

6. Dachlastenträger nach wenigstens einem der Ansprüche 1 bis 5, dadurch gekennzeichnet, daß jeder Zapfen (7) mit axial und radial verlaufenden Kulissennuten (14, 15) ausgebildet ist, in die an den Hülsen (8) angeordnete Führungsnocken (16) eingreifen.

7. Dachlastenträger nach wenigstens einem der Ansprüche 1 bis 6, dadurch gekennzeichnet, daß jede Hülse (8) einen durch eine kopfseitige Verdickung gebildeten Ringflansch aufweist, an dem sich einendig eine sich anderendig am Fahrzeugdach (1) anliegende Schraubendruckfeder (17) abzustützen vermag.

8. Dachlastenträger nach wenigstens einem der Ansprüche 1 bis 7, dadurch gekennzeichnet, daß jeder Zapfen (7) unmittelbar am Fahrzeugdach (1) befestigt ist.

9. Dachlastenträger nach wenigstens einem der Ansprüche 1 bis 7, dadurch gekennzeichnet, daß die Zapfen (7) jeweils an einem Kulissenstein (9) sitzen, der seinerseits am Fahrzeugdach (1) befestigt ist und zudem zur Halterung je einer sich auf dem Dach (1) abstützenden, eine Trägerleiste (4) aufnehmenden Dachleiste (2) dient.

10. Dachlastenträger nach Anspruch 9, dadurch gekennzeichnet, daß die Dachleisten (2) jeweils eine nach oben offene Aussparung (3) zur Aufnahme jeweils einer Trägerleiste (4) aufweisen.

11. Dachleistenträger nach wenigstens einem der Ansprüche 1 bis 7, dadurch gekennzeichnet, daß die Zapfen (7) jeweils an einem Kulissenstein (9) sitzen, die seinerseits am Fahrzeugdach (1) befestigt ist und zudem zur Halterung je eines sich auf dem Fahrzeugdach (1) abstützenden Stützfußes (19) dient, von denen jeweils zwei eine Trägerleiste (4) tragen.

## Claims

1. A roof rack for vehicles with two support strips (4), which are fixed on the roof (1) and are rotatable from a first position, in which they extend at least approximately parallel to each other along the lateral edges of the roof surface, to a second position, in which they extend transversly on top of the roof (1), around a vertical axis (6), and are fixable in each position, characterised in that said strips (4) are additionally movable along the vertical axis (6) and are fixable in a lower as well as in an upper position.

2. A roof rack according to claim 1, characterised in that the support strips (4) are movable, after the releasing of a fixing element (adjusting screw 10) from a lower position near the roof surface to an upper position away from the roof surface, and the strips are rotatable when positioned in this upper position.

3. A roof rack according to claim 1 or 2, characterised in that there are provided elastic means (helical compression spring 17) for supporting the traslatory movement.

4. A roof rack according to at least one of the claims 1 to 3, characterised in that the elastic means (17) are disposed so as to act on the support strips (4) respectively towards the upper position.

5. A roof rack according to at least one of the claims 1 to 4, characterised in that the vertical axis (6) are respectively formed by a pin (7) and a axially and radially guided bushing (8), whereby the pins (7) are fixed at one end at the roof (1) and the bushing (8) are fixed at one end at the roof strips (4) and the pins (7) respectively are provided with a hole (13) with an inner thread, in which the threaded shaft (12) of a screw (10) which is supported with its head (11) on the corresponding support strip (4) is axially guided.

6. A roof rack according to at least one of the claims 1 to 5, characterised in that each pin (7) is formed with axially and radially extending link grooves (14, 15), in which there are inserted guiding dents (16) which are disposed on the bushings(8).

7. A roof rack according to at least one of the claims 1 to 6, characterised in that each bushing (8) is provided with an annular flange formed by a frontal collar, and the compression spring (17) lies with one end on this flange and with the other end against the roof (1).

8. A roof rack according to at least one of the claims 1 to 7, characterised in that each pin (7) is directly fixed on the roof (1).

9. A roof rack according to at least one of the claims 1to 7, characterised in that the pins (7) are positioned on a respective link plug (9), which is fixed on the roof (1) and which supports a corresponding roof strip (2) which is positioned on the roof (1) and lodges a support strip (4).

10. A roof rack according to claim 9, characterised in that the roof strips (2) are respectively provided with an open cavity (3) for lodging a respective support strip (4).

11. A roof rack according to at least one of the claims 1 to 7, characterised in that the pins (7) are respectively disposed on a link plug (9), which is fixed on the roof (1) and supports at the same time a support foot (19) which is positioned on the roof (1), whereby two support feet (19) support one support strip (4).

## Revendications

1. Galerie de toit pour véhicules ayant deux profilés porteurs (4) fixés au toit (1) du véhicule, lesquels peuvent tourner autour d'un axe vertical (6), depuis une première position dans laquelle ils sont sensiblement parallèles l'un à l'autre et s'étendent le long des bords latéraux de la surface de toit jusqu'à une deuxième position dans laquelle ils s'étendent transversalement au-dessus de la surface de toit du véhicule, et sont susceptibles de fixation en correspondance de chacune de ces positions, caractérisée en ce que les profilés porteurs (4) peuvent en outre être déplacés le long de l'axe vertical (6) et peuvent être fixés en hauteur suivant deux positions, respectivement basse et haute.

2. Galerie de toit pour véhicules selon la revendication 1, caractérisée en ce qu'après avoir desserré une retenue (vis d'arrêt 10) les profilés porteurs (4) peuvent être déplacés alternativement depuis une position basse à proximité de la surface de toit jusqu'à une position haute écartée de la surface de toit et qu'à cette position haute ils peuvent tourner.

3. Galerie de toit pour véhicules selon la revendication 1 ou 2, caractérisée en ce que des moyens à ressort (ressort de compression hélicoïdal 17) sont prévus pour contribuer au mouvement de déplacement.

4. Galerie de toit pour véhicules selon l'une au moins des revendications 1 à 3, caractérisée en ce que les moyens à ressort (17) sont disposés de telle sorte qu'ils arment respectivement les profilés porteurs (4) dans la direction de la position haute.

5. Galerie de toit pour véhicules selon l'une au moins des revendications 1 à 4, caractérisée en ce que les axes verticaux (6) sont matérialisés respectivement par un goujon (7) et une douille (8) guidée de manière axiale et radiale sur ce dernier, les goujons (7) étant fixés par l'une de leurs extrémités au toit du véhicule et les douilles (8) étant fixées par l'une de leurs extrémités aux profilés porteurs (4), et les goujons (7) présentant respectivement un trou (13) taraudé dans lequel est guidée, de manière à pouvoir se déplacer axialement, la tige filetée (12) d'une vis d'arrêt (10) supportée par sa tête (11) sur le profilé porteur (4) respectif.

6. Galerie de toit pour véhicules selon l'une au moins des revendications 1 à 5, caractérisée en ce que chaque goujon (7) est de forme présentant des rainures de coulisse (14, 15) s'étendant radialement et axialement, dans lesquelles s'engagent des cames de guidage (16) disposées sur les douilles (8).

7. Galerie de toit pour véhicules selon l'une au moins des revendications 1 à 6, caractérisée en ce que chaque douille (8) présente une bride annulaire comportant un élargissement du côté de la tête, sur laquelle peut être soutenu, par l'une de ses extrémités, un ressort de compression hélicoïdal (17) supporté par son autre extrémité sur le toit (1) du véhicule.

8. Galerie de toit pour véhicules selon l'une au moins des revendications 1 à 7, caractérisée en ce que chaque goujon (7) est fixé directement sur le toit du véhicule (1).

9. Galerie de toit pour véhicules selon l'une au moins des revendications 1 à 7, caractérisée en ce que les goujons (7) sont logés respectivement sur un coulisseau (9) lequel à son tour est fixé au toit (1) du véhicule et fait également fonction de retenue pour un profilé de toit (2) supporté sur le toit (1) et recevant un profilé porteur (4).

10. Galerie de toit pour véhicules selon la revendication 9, caractérisée en ce que les profilés de toit (2) présentent respectivement un évidement ouvert vers le haut pour recevoir un profilé porteur (4).

11. Galerie de toit pour véhicules selon l'une au moins des revendications 1 à 7, caractérisée en ce que les goujons (7) sont respectivement logés sur un coulisseau (9) lequel à son tour est fixé au toit (1) du véhicule et fait également fonction de retenue pour un pied d'appui (19) posé et supporté sur le toit (1) du véhicule, deux pieds d'appui (19) portant un profilé porteur (4).
